# EUROPEAN PATENT SPECIFICATION

(11) **EP 3 514 196 B1**
(45) Date of publication and mention of the grant of the patent: **24.03.2021**
(21) Application number: 18819252.0
(22) Date of filing: 11.10.2018
(51) Int. Cl.: C08G 85/00, B01J 19/18, C08G 65/40, C08G 75/0259, C08G 75/23, C08G 75/0277, C08G 75/0281, B01J 19/00

(54) **CONTINUOUS PRODUCTION DEVICE AND CONTINUOUS PRODUCTION METHOD FOR POLYMER**
VORRICHTUNG ZUR KONTINUIERLICHEN HERSTELLUNG UND VERFAHREN ZUR KONTINUIERLICHEN HERSTELLUNG VON POLYMER
DISPOSITIF DE PRODUCTION CONTINUE ET PROCÉDÉ DE PRODUCTION CONTINUE DE POLYMÈRE

(30) Priority: 12.10.2017 JP 2017198701
(43) Date of publication of application: 24.07.2019
(73) Proprietor: Kureha Corporation, Chuo-ku Tokyo 103-8552 (JP)
(72) Inventor: SUZUKI, Kenji, Tokyo 103-8552 (JP); MIYAHARA, Michihisa, Tokyo 103-8552 (JP); SAKABE, Hiroshi, Tokyo 103-8552 (JP)
(74) Representative: BRP Renaud & Partner mbB Rechtsanwälte Patentanwälte Steuerberater
(86) International application number: PCT/JP2018/037912
(87) International publication number: WO 2019/074051

(56) References cited:
- EP-A1- 2 572 779
- US-A- 4 370 470

## Description

### Technical Field

The present invention relates to a continuous production device and a continuous production method for a polymer.

### Background Art

As important industrial materials, various polymers are widely used for various uses such as industrial materials, fiber materials, and building materials. For example, aromatic polymers containing hetero atoms such as sulfur, oxygen and nitrogen, such as aromatic polythioether typified by polyarylene sulfide (PAS); aromatic polysulfone typified by polysulfone (PSU), polyphenylsulfone (PPSU) and polyether sulfone (PES); aromatic polyether ketone typified by polyetheretherketone (PEEK) and polyether ketone (PEK); aromatic polyethernitrile; and thermoplastic polyimide typified by polyetherimide (PEI) are engineering plastics having excellent heat resistance, chemical resistance, flame retardancy, mechanical strength, electrical characteristics, dimensional stability, and the like and can be shaped into various types of molded product, films, sheets, fibers, and the like by common melting processes such as extrusion molding, injection molding, and compression molding. Thus, such engineering plastics are widely used in various technical fields of electric devices, electronic devices, automobile devices, packaging materials, and the like.

Examples of the method of producing such polymers include not only methods using a batch system, but also methods using a continuous system. For example, Patent Documents 1 to 3 disclose continuous polymerization devices for producing a polymer and continuous polymerization methods using the devices in which pressure-resistant polymerization vessels are coupled in series, and in which a reaction solution in between polymerization vessels is transferred by the pressure difference.

Patent Documents 4 to 7 disclose continuous production devices which perform heat-melting polycondensation under reduced pressure. For example, Patent Document 4 discloses a device which continuously stirs a high viscosity material in accordance with the viscosity with a configuration in which a stirring rotor is disposed in a shape of a plurality of skewered disks on the inlet side of the processing solution and in a cage-like shape having no rotation shaft on the outlet side of the processing solution, and a weir is attached to the disk on the inlet side so as to divide the interior of the main body into a plurality of sections in the longitudinal direction. Patent Documents 5 discloses a device which eliminates the stagnation of a polymer the viscosity of which has been increased due to the use of a hollow container in which a doughnut-shaped disk is fixed to a stirring blade having no central shaft. Patent Document 6 discloses a device in which the rotation shaft is not provided at the center portion of the stirring rotor for the purpose of performing a favorable surface renewal by sufficiently maintaining a thin film state of a processing solution in the main body. Patent Documents 7 discloses a device in which biaxial-figure-eight type polymerizing equipment is connected as a final polymerizing machine of a multistage-polymerizing machine for the purpose of facilitating the movement of a polymerization material having a high viscosity. Further, D8 discloses a vertical column in which a plurality of reaction vessels are vertically stacked.

### Citation List

### Patent Literature

Patent Document 1 US 4056515 B (specification)
Patent Document 2 US 4060520 B (specification)
Patent Document 3 US 4066632 B (specification)
Patent Document 4 JP H11-130869 A
Patent Document 5 JP H10-218998 A
Patent Document 6 JP H10-077348 A
Patent Document 7 JP S52-147692 A
Patent Document 8 US 4370470

### Summary of Invention

### Technical Problem

Conventional continuous polymer production devices disclosed in Patent Documents 1 to 3 require a plurality of pressure-resistant polymerization vessels, pipes between the polymerization vessels, transporting equipment, instrumentations, and the like, and consequently the reaction devices are complicated, leading to an increase in manufacturing costs. In addition, since a large amount of energy for driving the above-mentioned devices are required, it is difficult to reduce resources, energy, facility costs, and the like. In particular, in a solution desalting polycondensation reaction, salts (solids) generated as by-products in a polymerization reaction tend to accumulate in a bottom portion of the reactor. As a result, the reaction space might be reduced, and the ease of washing and maintenance might be sacrificed.

Continuous production devices using heat-melting polycondensation disclosed in Patent Documents 4 to 7 require pressure reducing equipment for reducing the pressure to near vacuum for the purpose of removing low-molecular weight components such as by-product water from the reaction system. Further, in the continuous production of melting polycondensation, the viscosity of the reaction system extremely increases in late phases in the reaction, and thus a device for sufficiently maintaining the processing solution in a thin film state so as to facilitate the volatilization of the by-product is required. Consequently, also these devices have difficulty in achieving energy savings and a reduction in facility costs.

In addition, in a case where a rotation shaft for attaching the stirring blade is provided at the center of the reactor in continuous production devices of heat-melting polycondensation, a reaction solution tends to rotate along with the rotation shaft as the viscosity of the reaction system increases. Consequently, it is necessary to adopt a complicated configuration in which a container which is hollow except for the rotation shaft at the center is provided in addition to the stirring blade, and as a result, washing, maintenance, and the like of the device might be laborious. Further, in melting polycondensation, the viscosity of the reaction system significantly changes from early phases to late phases in the reaction. Accordingly, the continuous production devices need to employ different structures for the viscosity of the processing liquid at the supply port side and the outlet side of the processing liquid, and as such complication of the devices is unavoidable.

To solve the above-mentioned problems, an object of the present invention is to provide a continuous production device and a continuous production method for a polymer which can reduce resources, energy, and facility costs, have a simple device configuration easy to wash and maintenance, and can efficiently advance solution polycondensation.

### Solution to Problem

A continuous production device according to the present invention for producing a polymer by solution polycondensation includes: a reactor main body; one or more divider plates configured to divide an interior of the reactor main body into a plurality of reaction vessels; a raw material supply unit configured to supply a raw material; and a reaction mixture recovery unit configured to recover a reaction mixture, in which each of the one or more divider plates has a rotation center; gas-phase parts of the reaction vessels adjacent to each other are communicating with each other and liquid-phase parts of the reaction vessels adjacent to each other are communicating with each other; and a reaction mixture generated in at least one of the plurality of reaction vessels sequentially moves through the reaction vessels.

### Advantageous Effects of Invention

According to the present invention, it is possible to provide a continuous production device and a continuous production method for a polymer which can achieve a resource reduction, energy savings, and a facility costs reduction.

### Brief Description of the Drawings

FIG. 1 is a partial cross-sectional view illustrating a continuous polymer production device according to an embodiment of the present invention.
FIG. 2 is a schematic view illustrating a flow of a reaction mixture and vapor (volatile component) in the continuous polymer production device illustrated in FIG. 1.
FIG. 3 illustrates a stirring blade and a divider plate used in the continuous polymer production device according to an embodiment of the present invention.
FIG. 4 is a partial cross-sectional view illustrating a continuous polymer production device according to another embodiment of the present invention.

### Description of Embodiments

Embodiments of the present invention will be described in detail below, but the present invention is not limited to the embodiments.

### Embodiment 1

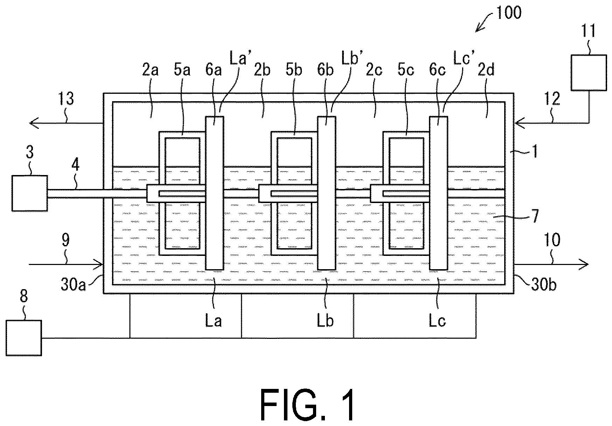

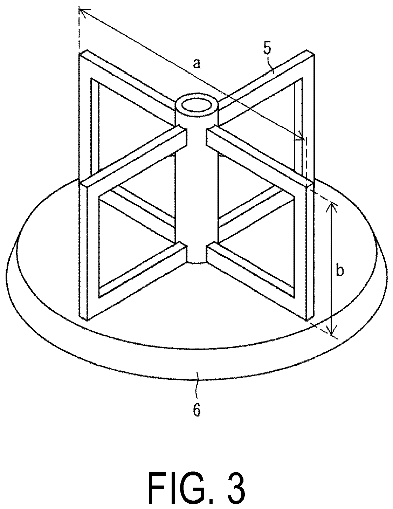

FIG. 1 is a partial cross-sectional view illustrating a continuous polymer production device according to an embodiment of the present invention (hereinafter referred to as "Embodiment 1"). FIG. 3 illustrates an embodiment of a stirring blade and a divider plate used in the continuous polymer production device according to the present invention. A configuration according to Embodiment 1 is described below with reference to FIGS. 1 and 3.

A continuous polymer production device 100 according to Embodiment 1, whose rotation center is a rotation shaft, includes a reactor main body 1, a rotation shaft 4, stirring blades 5a, 5b and 5c provided on the rotation shaft 4, and divider plates 6a, 6b and 6c which are also provided on the rotation shaft 4. A reaction space in the reactor main body 1 is divided into four reaction vessels, 2a, 2b, 2c and 2d by the divider plates 6a to 6c. That is, in the specification, the reaction vessels are reaction sections separated by the divider plates.

The reactor main body 1 has a shape which is obtained by laying a hollow cylindrical column sideways whose bottom surfaces are a side wall 30a, which forms a part of the reaction vessel 2a and is opposite to the divider plate 6a, and a side wall 30b, which forms a part of the reaction vessel 2d and is opposite to the divider plate 6c. Note that the shape of the reactor main body 1 is not limited to the above-mentioned shape, and may be a shape which is obtained by laying a hollow rectangular prism sideways, or the like.

The side wall 30a of the reactor main body 1 is connected with a supply line (raw material supply unit) 9 configured to continuously or intermittently supply a solvent and a raw material such as a monomer to the reactor main body 1. As necessary, a water supply line configured to supply water to the reactor main body 1 may be connected to the side wall 30a. The side wall 30b of the reactor main body 1 may be connected with a reaction mixture recovery line (reaction mixture recovery unit) 10 configured to recover a reaction mixture from the reactor main body 1. Various types of raw materials and a solvent may be supplied to a liquid-phase part of the reaction vessel 2a through a gas-phase part, or may be directly supplied to the liquid-phase part of the reaction vessel 2a.

Examples of the reaction mixture in the present embodiment include a polymer obtained by solution polycondensation, an unreacted raw material, a solvent, and a by-product salt.

In addition, a temperature control device 8 such as a heater is connected with the wall surface of the reactor main body 1, and thus the temperature of the reaction vessel, which is the reaction section, can be adjusted.

While all reaction vessels are connected with the temperature control device 8 in FIG. 1, the temperature control device 8 may not be provided for each reaction vessel. A plurality of temperature control devices may adjust the temperature of a single reaction vessel, or, a single temperature control device may adjust the temperature of a plurality of reaction vessels. Further, some of the reaction vessels may not be connected with the temperature control device. It should be noted that, from a viewpoint of the controllability of the reaction in a polymerization reaction, at least two reaction vessels are preferably provided with the temperature control device. With such a temperature control device, the temperature of the reaction vessels 2a to 2d can be raised from the upstream side toward the downstream side in the movement direction of the reaction mixture, for example.

The reaction vessel 2a, the reaction vessel 2b, the reaction vessel 2c and the reaction vessel 2d are placed in series in the named order. The reaction vessel 2a and the reaction vessel 2b are separated by the divider plate 6a; the reaction vessel 2b and the reaction vessel 2c are separated by the divider plate 6b; and the reaction vessel 2c and the reaction vessel 2d are separated by the divider plate 6c.

The stirring blade 5a configured to stir the reaction mixture in the reaction vessel 2a is attached on one surface of the divider plate 6a. Likewise, the stirring blade 5b configured to stir the reaction mixture in the reaction vessel 2b is attached on one surface of the divider plate 6b, and the stirring blade 5c configured to stir the reaction mixture in the reaction vessel 2c is attached on one surface of the divider plate 6c.

The stirring blades 5a, 5b and 5c and the divider plates 6a, 6b and 6c are disposed on the same rotation shaft 4. The rotation shaft 4 is disposed in such a manner as to extend from the outside of the reactor main body 1 to the side wall 30b through the side wall 30a. At an end of the rotation shaft 4 on the side wall 30a side, a rotational driving device 3 configured to rotate the rotation shaft 4 is disposed.

Note that the stirring blade may be disposed at any position with respect to the divider plate. The divider plate may be located on the upstream side and/or the downstream side of the stirring blade. While the divider plate may be spaced away from the stirring blade, it is preferable that the divider plate be in intimate contact with the stirring blade as illustrated in FIG. 3 since the divider plate can be fixed and reinforced. In addition, the stirring blade may not be provided for each divider plate, and the stirring blade may not be provided between some divider plates adjacent to each other. When at least one stirring blade is provided, the polymerization reaction can be facilitated, and a solid in the reaction mixture can move more smoothly. Alternatively, the stirring blade may not be provided, and with such a configuration, a simpler device configuration can be achieved.

The shape of the divider plate is not limited as long as the shape has a rotation center and provides an opening portion or a clearance having a predetermined width described later while partially closing the vertical cross-section in the reactor main body 1. For example, in a case where the reactor main body 1 has a hollow cylindrical column shape, the divider plate 6 may have a disk-like shape with a radius a little smaller than the internal space of the reactor main body as illustrated in FIG. 3. Note that the shape of the divider plate is not limited to this and may not have the central shaft. In a case where the divider plate has no central shaft, adjacent divider plates may be coupled with each other with a mesh member such that a plurality of divider plates form a cage-shaped rotation member, for example. The cage-shaped rotation member has a rotation shaft provided at an outer divider plate (the divider plate closest to the side wall 30b) and can rotate the divider plates by rotating the rotation shaft even with the inner divider plates having no central shaft.

The number of the divider plates provided on the rotation shaft is not limited as long as one or more divider plates are provided, and may be set in accordance with the size of the reactor, the type of the polymerization reaction, and the like. A configuration with a large number of divider plates, in other words, a large number of the reaction vessels as the reaction sections, is preferable in view of readily suppressing a backflow of the reaction mixture and the volatile component. Conversely, a configuration with a small number of the divider plates is preferable in view of achieving a simple device configuration.

In a case where two or more divider plates are provided, the plates may have the same or different shapes. A configuration in which the divider plates have the same shape is preferable in view of simplifying the device configuration and achieving a further cost reduction.

In addition, the angle of the divider plate to the rotation shaft may set at one's discretion. For example, as illustrated in FIGS. 1, 2, and 4, the divider plates 6a, 6b or 6c may be perpendicular or tilted to the rotation shaft 4. It should be noted that, in a case where the divider plate is tilted to the movement direction of the reaction mixture (a reaction mixture recovery line 10 side), the angle between the divider plate and the rotation shaft is preferably 30° to 150°, or more preferably 60° to 120°, or most preferably 90°, that is, a right angle, in view of preventing the mixing of the reaction mixture in front and rear of the divider plate. Further, the divider plates may be independent of each other, or coupled with each other at portions other than the rotation shaft. For example, the divider plates may be coupled with each other at a portion other than the rotation shaft as with a screw shape. In addition, the above-mentioned divider plates may be optionally combined.

The shape of the stirring blade is not limited, and may have any shape as long as the shape is coaxial with the divider plate and stirs the reaction mixture. The stirring blade 5 may be attached on one surface of the divider plate 6 as illustrated in FIG. 1 and FIG. 3, or may be attached on both surfaces of the divider plate 6. Alternatively, the stirring blade 5 may be attached independently of the divider plate on the rotation shaft 4. In addition, any number of stirring blades may be provided in each reaction vessel. Alternatively, as illustrated in FIG. 1, the reaction vessels 2a to 2c including the stirring blades 5a to 5c, respectively, and the reaction vessel 2d including no stirring blade may be provided in accordance with the necessity of stirring. Further, with a combination of a plurality of divider plates, a divider plate of the above-mentioned shape or one comparable to the above-mentioned shape may be achieved.

When the rotation shaft 4 is rotated by the rotational driving device 3, and accordingly the stirring blades 5a to 5c disposed on the rotation shaft 4 rotate around the rotation shaft 4, the reaction mixture is stirred. The stirring blades 5a to 5c are disposed on the same rotation shaft 4, and therefore, by only rotating the rotation shaft 4 by the rotational driving device 3, all the stirring blades 5a to 5c can be rotated under the same condition so as to achieve an uniform stirring with high efficiency.

The liquid-phase parts of the reaction vessels 2a to 2d are communicating with one another. As a result, the solvent and the raw materials supplied to the reaction vessel 2a sequentially move through the reaction vessel 2b, 2c and 2d while advancing a polymerization reaction as a reaction mixture 7, and are discharged from the reaction mixture recovery line 10. At this time, even in the case that a by-product salt is deposited, the deposited salt moves in the downstream direction together with the reaction mixture and is discharged from a salt removal unit and the like without accumulating in the bottom portion of the reaction vessel. Accordingly, a reduction in the reaction space of the reaction vessel can be prevented.

In addition, the gas-phase parts of the reaction vessels 2a to 2d are communicating with one another. As a result, the gas-phase pressure in the reactor main body 1 is uniform. With a temperature difference inside the device and the like, the volatile component which is generated at the time of polymerization in each reaction vessel sequentially moves from the reaction vessel 2d to the reaction vessels 2c, 2b and 2a through the gas-phase parts, and is discharged from a discharge line 13.

With the continuous production device according to the present embodiment, the gas-phase parts and the liquid-phase parts of reaction vessels adjacent to each other are communicating with each other; and reaction raw materials including a solid and a liquid, a reaction mixture including a solid and a liquid can be moved from the raw material supply unit (supply line) to an output unit (reaction mixture recovery line).

In the continuous production device 100 of the present embodiment, a clearance (La to Lc and La' to Lc') of a predetermined width is provided between the inner wall of the reactor main body 1 and each of the outer edges of the divider plates 6a to 6c. That is, according to the present embodiment, not only a gas and a liquid, but also a solid can move. Note that instead of providing the clearance, an opening portion such as a through hole or a slit may be provided in the divider plate so as to communicate between each reaction vessel through the opening portion. Alternatively, both of the clearance and the opening portion may be provided. Alternatively, the divider plate may have a mesh form including a plurality of fine through holes. The clearance or the opening portion brings about an effect of suppressing a backflow of the reaction mixture and the volatile component.

In a case where a polymer is produced with the continuous production device of the present embodiment, it is preferable to adjust the amount of liquid such that the total volume of the liquid-phase part with respect to the internal volume of the continuous production device is 10 to 95%, more preferably 20 to 90%, more preferably 30 to 85%.

The width of the clearance or the size of the opening portion is not particularly limited, and may be appropriately set in accordance with the shape of the container, the shape and the number of the divider plate and the like. The proportion of the cross-sectional area of the clearance or the opening portion in the vertical cross-section of the internal space of the reactor is 1 to 50%, or preferably 3 to 30%, or more preferably 5 to 20%. When the ratio of the cross-sectional area of the clearance or the opening portion falls within the above-mentioned range, a backflow of the reaction mixture including solids and the volatile component can be prevented, and the movement can be controlled.

By setting the ratio of the clearance or the opening to the vertical cross-section of internal space to a small value, the flow rate of the gas containing the volatile component or the reaction mixture passing through that portion can be increased, and a backflow can be prevented. Examples of the method of reducing the width of the clearance, that is, the distance between the inner wall of the reactor main body 1 and the outer edge of divider plate 6, include increasing the size of the divider plate 6, and providing a weir of a given shape, which reduces the distance to the outer edge of the divider plate, in the inner wall surface of the reactor main body at a position opposite to the divider plate. For example, in a case where the reactor main body 1 has a hollow rectangular prism shape and the divider plate 6 has a disk shape, weirs, each of which has a substantially triangular shape may be provided at the four corners of the reactor main body 1 on the inner wall opposite to the divider plate in such a manner that the rotation of the divider plate is not disturbed.

The clearance and the opening portion may be provided at any position of the divider plate. For example, the clearance may be provided along the entire outer edge of the divider plate. Alternatively, the clearance may be provided in a part of the inner edge of the reactor main body, such as only the top and bottom portions, as long as the communication between the gas-phase parts and the communication between the liquid-phase parts are ensured. In particular, the clearance is preferably provided at least in the bottom portion of the reactor main body. With this configuration, the accumulation of solids such as a salt as a by-product of the polymerization reaction in the bottom portion of the container can be more surely prevented.

One end of the discharge line 13 may be connected to a region near the side wall 30a of the reactor main body 1. In addition, a gas feeding unit 11 and a gas feeding line 12, which are configured to be communicating with the gas-phase part in the reactor main body 1 and configured to send inert gas to the gas-phase part from the downstream side toward the upstream side in the movement direction of the reaction mixture, that is, from the reaction vessel 2d toward the reaction vessel 2a, may be connected with the side wall 30b of the reactor main body 1. The inert gas is not limited, and may be a noble gas such as argon or the like, nitrogen, and the like.

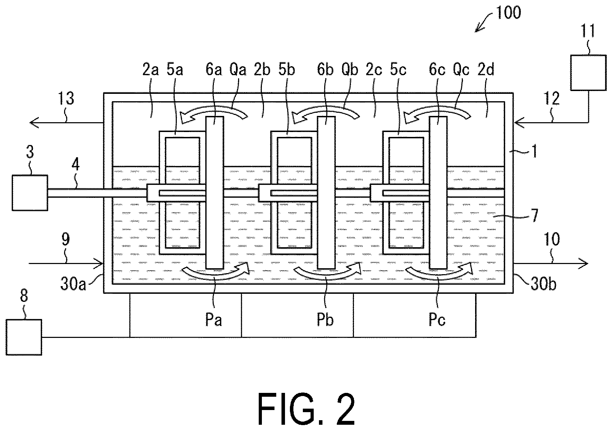

Next, an operation in Embodiment 1 is described with reference to FIG. 2. In FIG. 2, the right-arrows (Pa, Pb and Pc) drawn below the lower part of the divider plates indicate the movement direction of the reaction mixture. The left-arrows (Qa, Qb and Qc) drawn above the upper portions of the divider plates indicate the movement direction of the inert gas and the volatile component.

As illustrated in FIG. 2, various types of raw materials such as a monomer and a solvent are supplied to the reactor main body 1 through a supply line 9. The raw materials and the solvent may be separately supplied from respective supply lines, or raw materials and solvent which are preliminarily mixed together in part or in its entirety may be supplied.

The supplied solvent and various types of raw materials are mixed in the reaction vessel 2a, and, in the solvent, a reaction mixture is formed as a result of a polymerization reaction of the monomer. Note that, in some situation, it is possible to adopt a configuration in which the polymerization reaction is not substantially advanced in the reaction vessel 2a, and the polymerization reaction advances in the reaction vessel 2b and succeeding reaction vessels. Next, the reaction mixture flows into the reaction vessel 2b through the clearance between the reactor main body 1 and the divider plate 6a in accordance with the flow of the continuously or intermittently supplied raw materials as indicated with the right-arrow Pa in FIG. 2. In the reaction vessel 2b, the polymerization reaction is advanced, and the reaction mixture flows into the reaction vessel 2c through the clearance between the reactor main body 1 and the divider plate 6b. Next, also in the reaction vessel 2c, the polymerization reaction is advanced, and the reaction mixture flows into the reaction vessel 2d through the clearance between the reactor main body 1 and the divider plate 6c. Likewise, in the reaction vessel 2d, the polymerization reaction is advanced, and finally, the reaction mixture is recovered through the reaction mixture recovery line 10. Purification, additional polymerization reaction, and/or the like is appropriately performed on the recovered reaction mixture, and thus a desired polymer can be obtained.

In a case where the polymerization reaction is desalting polycondensation and a salt is generated as a by-product of the polymerization reaction, the salt moves together with the reaction mixture and is discharged from the recovery line 10.

The liquid level in the reactor main body 1 can be appropriately adjusted by the supply speed of the raw materials and the discharge speed of the reaction mixture. The liquid level of the reaction mixture may be appropriately set within the range of the height of the upper end of the divider plate.

Further, it is preferable that the gas feeding line 12 send inert gas to the gas-phase part in the reactor main body 1 from the downstream side toward the upstream side in the movement direction of the reaction mixture, that is, from the reaction vessel 2d toward the reaction vessel 2a as illustrated in FIG. 2. With this configuration, a backflow of gas containing a volatile component can be surely suppressed. In particular, in the continuous production device 100, the passing speed of inert gas increases at the clearance between the inner wall of the reactor main body 1 and the divider plate. As a result, as the left-arrows (Qa, Qb and Qc) indicate in FIG. 2, the gas containing a volatile component moves in the upstream direction together with the inert gas without flowing back in the downstream direction, and is, preferably, discharged from the discharge line 13.

The flow rate of the inert gas is not limited as long as the flow of the gas containing a volatile component toward the downstream side is suppressed.

Mainly, the volatile component includes water and the solvent of the reaction mixture. In particular, it is preferable that, by the operation of a water removing unit through the discharge line 13, at least a part of the water in the reactor main body 1 be removed from the reactor main body 1 through the gas-phase part in the reactor main body 1. Examples of the water in the reactor main body 1 include water supplied to the reactor main body 1 and water generated by a polymerization reaction. The water supplied to the reactor main body 1 is, for example, water actively supplied to the reactor main body 1, and, in a case where water is not actively supplied to the reactor main body 1, normally, water which is contained in reaction raw materials and supplied to the reactor main body 1 together with the reaction raw materials. The vapor pressure of water is high, and therefore, in a case where a large amount of moisture is contained in the gas-phase part of the reactor main body 1, the pressure inside the reactor main body 1 tends to be high and the reactor main body 1 is required to be provided with a pressure-resistant configuration, and as such, saving resources, a reduction in facility costs, and the like become difficult. By performing dehydration with the water removing unit to reduce the pressure in the reactor main body 1, saving resources, a reduction in facility costs, and the like can be effectively achieved.

The pressure in the reactor main body 1 can be reduced to a level of pressure at which a supplied solvent does not boil, and for example, can be reduced to a gauge pressure of about 0.3 MPa, or further to a gauge pressure of about 0.2 MPa depending on the temperature of the reaction vessel. In addition, preferably, the pressing state can be reduced to a gauge pressure of about 0.04 MPa, or further to a gauge pressure of about 0.0001 MPa, or, to 0 MPa. While a negative gauge pressure may be applied, the pressing state is preferable in view of the energy cost for generating negative pressures, a reduction in boiling point of the solvent, and the like.

Since the reaction vessels 2a to 2d are communicating with one another through the gas-phase parts in the reactor main body 1 and the pressure of the gas-phase part in the reactor main body 1 is uniform, the water is equivalently removed from the reaction vessels 2a to 2d by the water removing unit. Therefore, the amount of the water in the reaction mixture decreases from the reaction vessel 2a toward the reaction vessel 2d, that is, from the upstream side toward the downstream side in the movement direction of the reaction mixture. As a result, reaction inhibition due to the water is suppressed, and the polymerization reaction is facilitated. In addition, since the boiling point of the reaction mixture increases, polymerization at a high temperature is achieved, and the polymerization reaction can be further facilitated. Then, with the facilitated polymerization reaction, the temperature of the reaction mixture easily increases, and the polymerization reaction is further facilitated. As described above, the continuous polymer production device 100 may include a means for increasing the temperature of the reaction vessels 2a to 2d from the upstream side toward the downstream side in the movement direction entirely through the continuous reaction performed with the components arranged in the above-mentioned manner, for example.

In addition, since the temperature of the reaction vessel increases from the upstream side toward the downstream side in the movement direction, gas containing a volatile component moves from the downstream side toward the upstream side, and thus backflows, in other words, the movement, from the upstream side to the downstream side in the movement direction of the reaction mixture, of the gas can be further suppressed.

Further, as illustrated in FIG. 2, the temperature control device 8 such as a heater is connected with the wall surface of the reactor main body 1. With this configuration, the temperature of the reaction vessel as the reaction section can be adjusted, and the advancement of the polymerization reaction and the movement of the volatile component can be further stably managed and controlled.

While the temperature control device 8 is connected with all reaction vessels in FIG. 2, the temperature control device 8 may not be provided for each reaction vessel, a plurality of temperature control devices may adjust the temperature of a single reaction vessel, or a single temperature control device may adjust the temperature of a plurality of reaction vessels. Further, some of the reaction vessels may not be connected with the temperature control device. It should be noted that, from a viewpoint of the controllability of the polymerization reaction, at least two reaction vessels are preferably provided with the temperature control device. With such a configuration, the temperature of the reaction vessels 2a to 2d can be raised from the upstream side toward the downstream side in the movement direction of the reaction mixture, for example.

### Embodiment 2

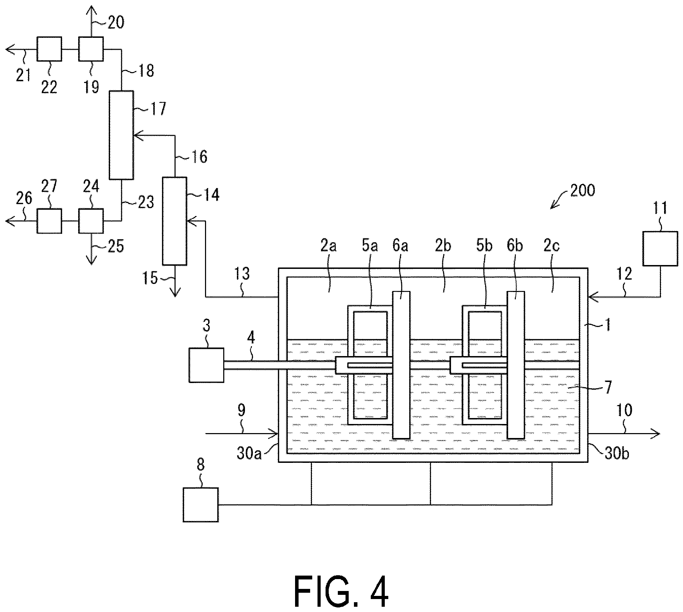

FIG. 4 is a partial cross-sectional view illustrating a continuous polymer production device according to another embodiment (hereinafter referred to as "Embodiment 2") of the present invention. A configuration and the operation of Embodiment 2 are described below with reference to FIG. 4. Note that members having the same functions as those of the members described in the above-mentioned embodiment are denoted with the same reference numerals, and the descriptions thereof is omitted for the convenience of description.

A continuous polymer production device 200 according to Embodiment 2 includes three reaction vessels, 2a to 2c, which are separated by the divider plates 6a and 6b in the reactor main body 1.

In addition, the stirring blade 5a configured to stir the reaction mixture in the reaction vessel 2a is attached on one surface of the divider plate 6a. Likewise, the stirring blade 5b configured to stir the reaction mixture in the reaction vessel 2b is attached on one surface of the divider plate 6b. The stirring blades 5a and 5b and the divider plates 6a and 6b are disposed on the same rotation shaft 4. The rotation shaft 4 extends from the outside of the reactor main body 1 to the side wall 30b through the side wall 30a. The rotational driving device 3 configured to rotate the rotation shaft 4 is disposed at an end of the rotation shaft 4 on the side wall 30a side.

In addition, one end of the discharge line 13 is connected to a region near the side wall 30a of the reactor main body 1. The other end of the discharge line 13 is connected with a water removing unit 14 configured to perform dehydration from the gas-phase part in the reactor main body 1. The water removing unit 14 is communicating with the gas-phase part in the reactor main body 1 through the discharge line 13. One end (e.g., a lower portion) of the water removing unit 14 is connected with a solvent recovery line 15. The other end (e.g., an upper portion) of the water removing unit 14 is connected with one end of a vapor recovery line 16. The other end of the vapor recovery line 16 is connected with a gas-liquid separation unit 17. The other end of a gas recovery line 18 branched from one end (e.g., an upper portion) of the gas-liquid separation unit 17 is connected with a reaction raw material separating/recovering unit 19. A gas discharge line 20 and a reaction raw material resupplying line 21 are branched from the reaction raw material separating/recovering unit 19, and the reaction raw material resupplying line 21 is connected with a reaction raw material resupplying unit 22 configured to resupply at least a part of the reaction raw material separated and recovered in the reaction raw material separating/recovering unit 19 to at least a part of the reaction vessels 2a to 2c. On the other hand, a liquid recovery line 23 branched from the other end (e.g., a lower portion) of the gas-liquid separation unit 17 is connected with a reaction raw material separating/recovering unit 24. A wastewater line 25 and a reaction raw material resupplying line 26 are branched from the reaction raw material separating/recovering unit 24, and the reaction raw material resupplying line 26 is connected with a reaction raw material resupplying unit 27 configured to resupply at least a part of the reaction raw material separated and recovered in the reaction raw material separating/recovering unit 24 to at least a part of the reaction vessels 2a to 2c. At least a part of the reaction raw material may be supplied to at least a part of the liquid phase of the reaction vessels 2a to 2c through the gas-phase part, or may be directly supplied to at least a part of the liquid phase of the reaction vessels 2a to 2c.

Configurations other than the above-mentioned configurations are identical to those of the continuous polymer production device 100 according to Embodiment 1.

The exhaust gas from the reactor main body 1 is supplied to the water removing unit 14 through the discharge line 13. The water removing unit 14 acts as, for example, a distillation column, and liquid mainly composed of the solvent is recovered from one end (e.g., a lower portion) thereof whereas vapor containing the raw material and the water is recovered from the other end (e.g., an upper portion) thereof.

The solvent recovered from the water removing unit 14 may be appropriately subjected to purification and the like, and may be thereafter resupplied to the reactor main body 1 as a solvent of the polymerization reaction.

The vapor recovered from the other end of the water removing unit 14 is supplied to the gas-liquid separation unit 17 through the vapor recovery line 16. The gas-liquid separation unit 17 acts as, for example, a distillation column, and gas containing a part of the raw material is recovered from one end (e.g., an upper portion) thereof whereas liquid containing the water and a part of the raw material is recovered from the other end (e.g., a lower portion) thereof.

The gas recovered from the one end of the gas-liquid separation unit 17 is supplied to the reaction raw material separating/recovering unit 19 through the gas recovery line 18. In the reaction raw material separating/recovering unit 19, the reaction raw material is separated and recovered from that gas, and sent to the reaction raw material resupplying unit 22 through the reaction raw material resupplying line 21. The remaining gas is discarded as exhaust gas through the gas discharge line 20.

At least a part of the raw material separated and recovered by the reaction raw material separating/recovering unit 19 is resupplied by the reaction raw material resupplying unit 22 to at least a part of the reaction vessels 2a to 2c.

The liquid recovered from the gas-liquid separation unit 17 is supplied to the reaction raw material separating/recovering unit 24 through the liquid recovery line 23. In the reaction raw material separating/recovering unit 24, a part of the raw material is separated and recovered from the above-mentioned liquid, and is sent to the reaction raw material resupplying unit 27 through the reaction raw material resupplying line 26. The remaining liquid is discarded as waste water through the wastewater line 25.

At least a part of the raw material separated and recovered by the reaction raw material separating/recovering unit 24 is resupplied to at least a part of the reaction vessels 2a to 2c by the reaction raw material resupplying unit 27.

Note that, in the present invention, in the reaction vessel 2a according to Embodiments 1 and 2, only dehydration may be performed.

In addition, the term "sequential connection" used in the specification preferably means a connection in series in its entirety, but may partially include a parallel connection.

The continuous production device according to Embodiments 1 and 2 may be used for the continuous production of various polymers obtained by solution polycondensation. Here, the solution polycondensation includes desalting polycondensation and dehydration polycondensation.

Examples of the polymer obtained by desalting polycondensation include an aromatic polymer including at least one hetero atom selected from the group consisting of sulfur, nitrogen and oxygen.

Specifically, examples of the aromatic polymer including at least one hetero atom selected from the group consisting of sulfur and oxygen include an aromatic polythioether having a thioether bond which is a bond between an aromatic ring and sulfur, and an aromatic polyether having an ether bond which is a bond between aromatic ring and oxygen. In a case where the above-mentioned bonds coexist in a polymer, it is classified as the aromatic polymer corresponding to the bond having the higher mole content.

Specifically, examples of the aromatic polythioether include polyarylenesulfide (PAS), more specifically, polyphenylenesulfide (PPS), polyphenylenesulfideketone (PPSK), polyphenylenesulfideketoneketone (PPSKK), polyphenylenesulfidesulfone (PPSS), and polyphenylenesulfideketonesulfone (PPSKS).

The aromatic polyether includes, other than the aromatic polymer composed of an aromatic ring and an ether bond and in addition to the groups, aromatic polymers containing at least one group selected from the group consisting of a sulfone group, a ketone group, and a group containing nitrogen. Further, examples include, in addition to the aromatic ring and the ether bond, aromatic polysulfones typified by polysulfone (PSU), polyphenylsulfone (PPSU), and polyethersulfone (PES) having a sulfone group. Further, examples include, in addition to the aromatic ring and the ether bond, polyaryletherketone (PAEK) having a ketone group. Specific examples include polyetheretherketone (PEEK), polyetherketone (PEK), polyetherketoneketone (PEKK), polyetheretherketoneketone (PEEKK), and polyetherketoneetherketoneketone (PEKEKK).

Further, examples include, in addition to the aromatic ring and the ether bond, polyether nitrile (PEN) having a nitrile group as an aromatic polymer in which a group containing nitrogen is bonded to an aromatic ring.

Examples of the polymer obtained by dehydration polycondensation include an aromatic polymer containing at least one hetero atom selected from the group consisting of sulfur, nitrogen and oxygen. Specific examples include a thermoplastic polyimide such as AURUM (trade name) available from Mitsui Chemicals, Inc. polyetherimide (PEI) such as ULTEM (trade name) available from SABIC IP, and polyamide imide (PAI), and include polymers having an ether bond, a ketone bond, and an amide bond as well as the imide bond formed by a dehydration polycondensation reaction, but the above-mentioned examples are not limited.

In the above description, in a case where the above-mentioned groups coexist in a polymer, it is classified as the aromatic polymer corresponding to the group having the highest mole content. The above description is merely an example, and is not limited.

The aromatic polymer produced by the desalting solution polycondensation is preferable. Aromatic polythioether and aromatic polyether are more preferable, and among them, polyarylene sulfide, aromatic polysulfone, polyaryletherketone and polyethernitrile are even more preferable in view of the ease of production with the method according to the present invention.

### Summary

In the present invention, a continuous production device for producing a polymer by solution polycondensation includes: a reactor main body; one or more divider plates configured to divide an interior of the reactor main body into a plurality of reaction vessels; a raw material supply unit configured to supply a raw material, in which each of the one or more divider plates has a rotation center, gas-phase parts of the reaction vessels adjacent to each other are communicating with each other and liquid-phase parts of the reaction vessels adjacent to each other are communicating with each other, and a reaction mixture generated in at least one of the plurality of reaction vessels sequentially moves through the reaction vessels.

In the above-mentioned configuration, the plurality of reaction vessels in the reactor main body are separated by the divider plates having a rotation center. The reaction mixture generated in each reaction vessel moves from the reaction vessel on the upstream side, to which the raw material is supplied, toward the reaction vessel on the downstream side through the liquid-phase parts communicating with one another in accordance with the flow of the raw material supplied from the raw material supply unit. On the other hand, the volatile component generated in each reaction vessel can move through the gas-phase parts communicating with one another in accordance with the temperature difference between the reaction vessels.

With this configuration, the reaction mixture moves in accordance with the supply flow of the raw materials, and therefore it is not necessary to additionally provide a means for moving the mixture to the next reaction vessel.

In addition, since the gas-phase parts are communicating with one another, the pressure of the gas-phase parts can be equalized, and accordingly volatilization from the reaction mixture can be controlled, and, the polymerization reaction can be facilitated.

In addition, when performing the maintenance of the device, the divider plate is pulled out from the reactor. Then, the reactor has a simple hollow structure, and accordingly washing and/or maintenance can be easily performed with a small number of operation processes.

According to the present invention, preferably, in the continuous production device according to the first aspect, the rotation center is a rotation shaft.

According to the present invention, preferably, in the continuous production device according to the first or second aspect, the rotation center is one rotation shaft extending across the plurality of reaction vessels; and the one or more divider plates are provided on the one rotation shaft.

With the above-mentioned configuration, pulling the divider plate in the maintenance of the device can be achieved by only pulling out the rotation shaft from the reactor. Thus, washing and/or maintenance can be further easily performed.

According to the present invention, preferably, the continuous production device according to any one of the first to third aspects further includes a stirring blade having a rotation center identical to the rotation center of the divider plate.

With the above-mentioned configuration, the advancement of the polymerization reaction can be assisted, and the movement of the solid in the reaction mixture can be further smoothed.

According to the present invention, preferably, in the continuous production device according to fourth aspect, the stirring blade is coupled with the divider plate.

With the above-mentioned configuration, the strength of the divider plate can be increased.

According to the present invention, preferably, in the continuous production device according to any one of the first to fifth aspects, gas-phase parts of the reaction vessels adjacent to each other are communicating with each other and liquid-phase parts of the reaction vessels adjacent to each other are communicating with each other through at least one of a clearance between an inner wall of the reactor main body and the divider plate and an opening portion provided in the divider plate.

With the above-mentioned configuration, the reaction mixture and the volatile component generated in each reaction vessel move to the adjacent reaction vessel through the clearance between the inner wall of the container main body and the divider plate, and/or through the opening portion provided in the divider plate. Accordingly, it is not necessary to additionally provide a configuration for communication between the gas-phase parts and communication between the liquid-phase parts, and thus a simple device configuration can be achieved.

According to the present invention, preferably, in the continuous production device according to sixth aspect, the clearance is provided at least in a lower portion of the reactor main body.

With the above-mentioned configuration, the reaction mixture moves in the downstream direction through the clearance of the lower portion of the container main body. Accordingly, in a case where a solid is generated as a reaction product or as a by-product, the solid moves without accumulating in the container bottom portion. Therefore, the polymerization reaction can be efficiently advanced, a reduction in the reaction space can be prevented, and washing and/or maintenance can be readily performed. In addition, the removal of the by-product solid is eased.

According to the present invention, preferably, the continuous production device according to any one of the first to seventh aspects further includes: a gas feeding line communicating with gas-phase parts of the reaction vessels in the reactor main body and configured to send inert gas to the gas-phase part from a downstream side toward an upstream side in a movement direction of the reaction mixture; and a discharge line configured to discharge the inert gas.

With the above-mentioned configuration, a flow of the inert gas is generated in the gas-phase parts communicating with one another in the reaction vessels in a direction from the downstream side toward the upstream side in the movement direction of the reaction mixture. Accordingly, the movement of the volatile component in the above-mentioned direction can be assisted, and a backflow (movement from the upstream side toward the downstream side in the movement direction of the reaction mixture) can be prevented.

According to the present invention, preferably, in the continuous production device according to any one of the first to eighth aspects, one or more divider plates include two or more divider plates, the divider plates each having identical shapes.

In the continuous production device for a polymer by solution polycondensation according to the present invention, the divider plates can have the same shapes, and accordingly the device configuration can be simplified, and the cost can be further reduced.

According to the present invention, preferably, in the continuous production device according to any one of the first to ninth aspects, the solution polycondensation is desalting polycondensation.

Even when applied to desalting polycondensation in which a large amount of by-product salts can be generated, the continuous production device for a polymer according to the present invention can speedily remove the salt, and can efficiently advance the solution polycondensation.

According to the present invention, preferably, the continuous production device according to any one of the first to tenth aspects further includes a water removing unit configured to remove moisture from the gas-phase part.

With the above-mentioned configuration, water, and the like generated in the polymerization reaction can be speedily removed, and the solution polycondensation can be efficiently advanced.

According to the present invention, a continuous production method for producing a polymer by solution polycondensation with a continuous production device including: a reactor main body; one or more divider plates configured to divide an interior of the reactor main body into a plurality of reaction vessels; and a raw material supply unit configured to supply a raw material, in which each of the one or more divider plates has a rotation center, gas-phase parts of the reaction vessels adjacent to each other are communicating with each other and liquid-phase parts of the reaction vessels adjacent to each other are communicating with each other, the method including: supplying a solvent and a monomer to the reactor main body in the continuous production device; forming a reaction mixture by performing a polymerization reaction of the monomer in the solvent in at least one reaction vessel; removing at least a part of a reaction product in the reactor main body from the reactor main body; and sequentially moving the reaction mixture through the reaction vessels, in which supplying, forming, removing, and moving are simultaneously performed.

With the above-mentioned configuration, the effect identical to that of the first aspect can be achieved.

According to the present invention, preferably, in the continuous production method according to the twelfth aspect, the solution polycondensation is desalting polycondensation.

With the above-mentioned configuration, the effect identical to that of the tenth aspect can be achieved.

According to the present invention, preferably, in the continuous production method according to the twelfth or thirteenth aspect, moisture is removed from the gas-phase part.

With the above-mentioned configuration, the effect identical to that of the eleventh aspect can be achieved.

The embodiments of the present invention will be described below in more detail with reference to Examples. As a matter of course, the present invention is not limited to the following Examples, and details may be modified. Further, the present invention is not limited to the above-described embodiments, various modifications may be made within the scope of the claims, and combinations of the disclosed techniques are also included in the technical scope of the present invention. In addition, the cited documents listed in the specification are used for reference purposes.

### Examples

In the examples of the present invention, parameters were measured by the following measurement methods.

### Measurement of weight average molecular weight (1): Example 1

The weight average molecular weight (Mw) of the polymer was measured under the following conditions using a Gel Permeation Chromatograph (GPC) (EXTREMA, available from JASCO Corporation). The weight average molecular weight was calculated based on calibration with polystyrene.
Solvent: LiBr0.01M NMP solution
Temperature: 40°C
Detector: RI detector
Sample injection amount: 100 µL (Concentration: 1 mg/1 mL),
Flow rate: 1.0 mL/min,
Polystyrene standard: five types of polystyrene standards of 427000, 96400, 37900, 17400, and 5560.

### Measurement of weight average molecular weight (2): Example 2

The weight average molecular weight (Mw) of the polymer was measured under the following conditions using a high-temperature Gel Permeation Chromatograph (GPC) SSC-7101 available from Senshu Scientific Co.,ltd. The weight average molecular weight was calculated based on calibration with polystyrene.
Solvent: 1-chloro naphthalene,
Temperature: 210°C,
Detector: UV detector (360 nm),
Sample injection amount: 200 µL (Concentration: 0.05 wt.%),
Flow rate: 0.7 mL/min,
Standard polystyrene: five types of standard polystyrenes of 616000, 113000, 26000, 8200, and 600.

### [Example 1] Production of PPSU

A continuous polymer production device used here is identical to the continuous polymer production device illustrated in FIG. 4 except that the reactor main body includes 11 reaction vessels partitioned with ten disk divider plates. In the continuous polymer production device, the reactor main body was a titanium reaction device with an internal diameter of 108 mm and a length of 300 mm. The ten divider plates had the same shape, and were provided on a rotation shaft having a diameter of 5 mm. Each divider plate was provided with, on the surface on the upstream side in the movement direction of the reaction mixture, two anchor type stirring blades in a cross form as illustrated in FIG. 3. The divider plate had a diameter of 100 mm, and the two anchor type stirring blades had a longitudinal axial length a of 90 mm and a short axial length b of 40 mm. At the position where each divider plate was provided, the ratio of the cross-sectional area of the clearance to the vertical cross-section of the internal space of the reactor main body was approximately 14%.

After 1700 g of N-methyl-2-pyrrolidone (NMP) was charged as an organic amide solvent into the continuous polymer production device, the temperatures of the reaction vessels were maintained with an external heater disposed in a bottom portion of the housing chamber while carrying nitrogen gas from the downstream side of the eleventh reaction vessel as counted from the upstream side in the movement direction of the reaction mixture. The temperatures were maintained such that a temperature 1 of the second reaction vessel as counted from the upstream side was maintained at 200°C; a temperature 2 of the fifth reaction vessel was maintained at 210°C; and a temperature 3 of the eleventh reaction vessel was maintained at 210°C. Here, the flow rate of the nitrogen gas was 0.1 NL/min, and the linear velocity of the nitrogen gas passing through the clearance of the divider plate in a standard state was 0.8 cm/s.

NMP, 4,4'-dihydroxy biphenyl (DHBP), dichlorodiphenyl sulfone (DCPS) and potassium carbonate were consecutively supplied as raw materials from supply lines with a quantitative pump at a flow rate of 8.5 g/min (NMP: DCPS (weight ratio) = 760:201.01, DHBP:DCPS (molar ratio) = 1:0.99, DHBP:potassium carbonate (molar ratio) = 1:1.1) while being stirred with a stirrer for eight hours. Note that, potassium carbonate in the mixture is insoluble and tends to aggregate, and therefore was stirred and pulverized at approximately 10000 rpm/min into a slurry form with a homogenizer before being supplied.

Simultaneously, using a distillation device connected with the continuous polymer production device, water was continuously removed from the continuous polymer production device while controlling the pressure at a gauge pressure of 0.1 MPa with a pressure-regulating valve. In addition, carbon dioxide gas generated by the reaction was discharged to the atmosphere via the distillation device and the reservoir.

Note that the amount of liquid was adjusted such that the total volume of the liquid-phase part with respect to the internal volume of the continuous production device was 55%.

A reaction mixture obtained after the above-mentioned operations were continued for eight hours was collected and analyzed. The reaction mixture was dropped into five times the amount of water to deposit and filtrate the product, followed by washing with methanol and filtering, and the obtained cake was dried for eight hours at 60°C in a vacuum, and thus, polyphenylsulfone (PPSU) powder was obtained. The weight average molecular weight Mw in terms of polystyrene of the obtained PPSU powder was approximately 90000 according to the GPC.

### [Example 2] Production of PAS

A continuous polymer production device used here has a configuration identical to that of the continuous polymer production device of Example 1 except that a washing part configured for the sedimentation of a by-product salt and for the countercurrent-continuous washing of the by-product salt is provided in a bottom portion of the eleventh reaction vessel as counted from the upstream side in the movement direction of the reaction mixture.

After 1600 g of NMP was charged as an organic amide solvent into the continuous polymer production device, the temperatures of the reaction vessels were maintained with an external heater disposed in a bottom portion of the housing chamber while carrying nitrogen gas from the downstream side of the eleventh reaction vessel as counted from the upstream side in the movement direction of the reaction mixture. The temperatures were maintained such that a temperature 1 of the second reaction vessel as counted from the upstream side was maintained at 230°C; a temperature 2 of the fifth reaction vessel was maintained at 260°C; and a temperature 3 of the eleventh reaction vessel was maintained at 260°C. Here, the flow rate of the nitrogen gas was 0.1 NL/min, and the linear velocity of the nitrogen gas passing through the clearance of the divider plate in a standard state was 0.8 cm/s.

Raw materials were continuously supplied from supply lines with a quantitative pump at flow rates of 2.65 g/min for NMP, 1.61 g/min for paradichlorobenzene (p-DCB), 1.63 g/min for 36.5wt% NaSH aqueous solution, and 2.6 g/min for 16.32wt% NaOH aqueous solution. Note that the amounts of NMP, p-DCB, and NaOH were 250 g, 1.030 mol, and 1.030 mol, respectively, per 1 mol of NaSH in the supplied raw materials.

In addition, using a distillation device connected with the continuous polymer production device, water was continuously removed from the continuous polymer production device while controlling the pressure at a gauge pressure of 0.3 MPa with a pressure-regulating valve. The p-DCB removed together with water was separated with a decanter, and was resupplied to the reactor as required. Further, small amounts of p-DCB and H₂S gas contained in the exhaust gas were recovered by absorbing them in the NMP and NaOH aqueous solution of the supplied raw material, and were resupplied to the reactor.

The polymerization reaction material was continuously overflown to a settling portion from the most downstream reaction vessel so as to settle the by-product salt in the polymerization reaction product, and washing NMP heated to 260°C was caused to flow from the settling downstream side of the by-product salt to the upstream side at a flow rate of 2.1 g per minute. In this manner, the sedimentation of the by-product salt was conducted and the countercurrent-continuous washing of the by-product salt was conducted with the washing solvent NMP. The reaction mixture from which the by-product salt including the washing NMP had been removed was continuously output from the reaction mixture recovery line.

Note that the amount of liquid was adjusted such that the total volume of the liquid-phase part with respect to the internal volume of the continuous production device was 55%.

The reaction mixture obtained after the above-mentioned operations were continued for 12 hours was recovered and analyzed. The reaction mixture was dropped into five times the amount of water to deposit and filtrate the product, followed by washing and filtration with the acetone of the equal weight for three times and with water of the equal weight for three times, and the obtained cake was dried in a vacuum at 80°C for eight hours, and thus, PPS powder was obtained. The weight average molecular weight Mw in terms of polystyrene of the obtained PPS powder was approximately 11000 according to the GPC.

### [Example 3] Production of PEEK

A continuous polymer production device used here has a configuration identical to that of the continuous polymer production device of Example 1 except that the housing chamber includes ten reaction vessels partitioned with nine disk divider plates. After 1500 g of N-methyl-2-pyrrolidone (NMP) was charged into the continuous production device, the temperatures of the reaction vessels were maintained with an external heater disposed in a bottom portion of the housing chamber while carrying nitrogen gas from the downstream side of the tenth reaction vessel as counted from the upstream side in the movement direction of the reaction mixture. The temperatures were maintained such that a temperature 1 of the third reaction vessel as counted from the upstream side was maintained at 210°C; a temperature 2 of the fifth reaction vessel was maintained at 240°C; a temperature 3 of the ninth reaction vessel was maintained at 260°C; and a temperature 4 of the tenth reaction vessel was maintained at 260°C. Here, the flow rate of the nitrogen gas was 1 NL/min, and the linear velocity of the nitrogen gas passing through the clearance of the divider plate in a standard state was 8 cm/s.

As raw materials, NMP, 4,4'-difluorobenzophenone (DFBP), hydroquinone (HQ) and potassium carbonate were supplied from supply lines with a quantitative pump at a flow rate of 13.8 g/min (NMP:DFBP (weight ratio) = 2804.43:654.53, DFBP:HQ (molar ratio)=1:1.01, HQ:potassium carbonate (molar ratio) = 1:1.1) while being stirred with a stirrer for six consecutive hours.

Note that pulverization and pressure adjustment of potassium carbonate were conducted as in Example 1.

The reaction mixture obtained after the above-mentioned operations were continued for five hours was dropped into five times the amount of water and the solid portion was filtrated, further followed by washing and filtration with methanol, and the obtained cake was dried in a vacuum for eight hours at 60°C, and thus, polyetheretherketone (PEEK) powder was obtained.

The recovery ratio (recovered amount/theoretical generation amount) of the separated and recovered by-product salt was approximately 50%. In addition, the reduced viscosity of the PEEK powder was 0.6 (dL/g), and the reduced viscosity was determined by the following method.

### Solution Adjustment Method

0.1 g of PEEK and 10 mL of 4-chloro phenol were dissolved by heating and stirring them in an oil bath at 180°C for 20 minutes. After cooled to room temperature, 3 mL of the solution was diluted with 7 mL of o-dichloro benzene.

### Reduced viscosity measurement method

Measurement was conducted with an Ubbelohde viscometer at 35°C.

### Calculation of reduced viscosity

The viscosity (η0) of the solvent was measured with an Ostwald viscometer tube. The specific viscosity ((η-η0)/η0) was determined based on the viscosity (η) of the adjusted solution and the viscosity (η0) of the solvent, and the reduced viscosity (dL/g) was determined by dividing the specific viscosity by the concentration (0.3 g/dL) of the solution.

### Reference Signs List

1 Reactor main body
2, 2a, 2b, 2c, 2d Reaction vessel
3 Rotational driving device
4 Rotation shaft
5, 5a, 5b, 5c Stirring blade
6, 6a, 6b, 6c Divider plate
7 Reaction mixture
8 Temperature control device
9 Supply line
10 Reaction mixture recovery line
11 Gas feeding unit
12 Gas feeding line
13 Discharge line
14 Water removing unit
15 Solvent recovery line
16 Vapor recovery line
17 Gas-liquid separation unit
18 Gas recovery line
19, 24 Reaction raw material separating/recovering unit
20 Gas discharge line
21, 26 Reaction raw material resupplying line
22, 27 Reaction raw material resupplying unit
23 Liquid recovery line
25 Wastewater line
30a, 30b Side wall
100, 200 Continuous production device

## Claims

1. A continuous production device for producing a polymer by solution polycondensation, the device comprising:
a reactor main body;
one or more divider plates configured to divide an interior of the reactor main body into a plurality of reaction vessels;
a raw material supply unit configured to supply a raw material; and a reaction mixture recovery unit configured to recover a reaction mixture,
wherein each of the one or more divider plates has a rotation center;
gas-phase parts of the reaction vessels adjacent to each other are communicating with each other and liquid-phase parts of the reaction vessels adjacent to each other are communicating with each other; and
a reaction mixture generated in at least one of the plurality of reaction vessels sequentially moves through the reaction vessels.

2. The continuous production device according to claim 1, wherein the reactor main body has a shape which is obtained by laying a hollow cylindrical column sideways.

3. The continuous production device according to claim 1 or 2, wherein the rotation center is a rotation shaft.

4. The continuous production device according to any one of claims 1 to 3, wherein the rotation center is one rotation shaft extending across the plurality of reaction vessels; and the one or more divider plates are provided on the one rotation shaft.

5. The continuous production device according to any one of claims 1 to 4, further comprising a stirring blade having a rotation center identical to a rotation center of the divider plate.

6. The continuous production device according to claim 5, wherein the stirring blade is coupled with the divider plate.

7. The continuous production device according to any one of claims 1 to 6, wherein gas-phase parts of the reaction vessels adjacent to each other are communicating with each other and liquid-phase parts of the reaction vessels adjacent to each other are communicating with each other through at least one of a clearance between an inner wall of the reactor main body and the divider plate and an opening portion provided in the divider plate.

8. The continuous production device according to claim 7, wherein a proportion of a cross-sectional area of the clearance or the opening portion in a vertical cross-section of an internal space of the reactor main body is from 1 to 50%.

9. The continuous production device according to claim 7, wherein the clearance is provided at least in a lower portion of the reactor main body.

10. The continuous production device according to any one of claims 1 to 9, further comprising:
a gas feeding line communicating with the gas-phase parts of the reaction vessels in the reactor main body and configured to send inert gas to the gas-phase part from a downstream side toward an upstream side in a movement direction of the reaction mixture; and
a discharge line configured to discharge the inert gas.

11. The continuous production device according to any one of claims 1 to 10, wherein the one or more divider plates comprise two or more divider plates, the divider plates each having identical shapes.

12. The continuous production device according to any one of claims 1 to 11, wherein the solution polycondensation is desalting polycondensation.

13. The continuous production device according to any one of claims 1 to 12, further comprising a water removing unit configured to remove moisture from the gas-phase part.

14. A continuous production method for producing a polymer by solution polycondensation with the continuous production device according to claim 1, the method comprising:
supplying a solvent and a monomer to the reactor main body in the continuous production device;
forming a reaction mixture by performing a polymerization reaction of the monomer in the solvent in at least one reaction vessel;
removing at least a part of a reaction product in the reactor main body from the reactor main body; and
sequentially moving the reaction mixture through the reaction vessels,
wherein the supplying, the forming, the removing, and the moving are simultaneously performed.

15. The continuous production method according to claim 14, wherein the solution polycondensation is desalting polycondensation.

16. The continuous production method according to claim 14 or 15, wherein moisture is removed from the gas-phase part.

## Patentansprüche

1. Vorrichtung zur kontinuierlichen Herstellung zum Herstellen eines Polymers durch Lösungspolykondensation, wobei die Vorrichtung umfasst:
einen Reaktorhauptkörper;
eine oder mehrere Trennplatten, die dafür konfiguriert sind, um ein Inneres des Reaktorhauptkörpers in eine Vielzahl von Reaktionsgefäßen zu teilen;
eine Rohmaterialzufuhreinheit, die dafür konfiguriert ist, um ein Rohmaterial zuzuführen; und eine Reaktionsgemisch-Rückgewinnungseinheit, die dafür konfiguriert ist, um ein Reaktionsgemisch zurückzugewinnen,
wobei jede der einen oder mehreren Teilerplatten ein Drehzentrum aufweist;
Gasphasenanteile der Reaktionsgefäße, die aneinander angrenzen, miteinander in Verbindung stehen und Flüssigphasenanteile der Reaktionsgefäße, die aneinander angrenzen, miteinander in Verbindung stehen; und
ein Reaktionsgemisch, das in mindestens einem der Vielzahl von Reaktionsgefäße erzeugt wird, sich nacheinander durch die Reaktionsgefäße bewegt.

2. Vorrichtung zur kontinuierlichen Herstellung nach Anspruch 1, wobei der Reaktorhauptkörper eine Form aufweist, die durch seitliches Legen einer hohlen zylindrischen Säule erhalten wird.

3. Vorrichtung zur kontinuierlichen Herstellung nach Anspruch 1 oder 2, wobei das Drehzentrum eine Drehwelle ist.

4. Vorrichtung zur kontinuierlichen Herstellung nach einem der Ansprüche 1 bis 3, wobei das Drehzentrum eine Drehwelle ist, die sich über die Vielzahl von Reaktionsgefäßen erstreckt; und die eine oder die mehreren Teilerplatten auf der einen Drehwelle bereitgestellt sind.

5. Vorrichtung zur kontinuierlichen Herstellung nach einem der Ansprüche 1 bis 4, ferner umfassend ein Rührblatt mit einem Drehzentrum, das mit einem Drehzentrum der Teilerplatte identisch ist.

6. Vorrichtung zur kontinuierlichen Herstellung nach Anspruch 5, wobei das Rührblatt mit der Teilerplatte gekoppelt ist.

7. Vorrichtung zur kontinuierlichen Herstellung nach einem der Ansprüche 1 bis 6, wobei Gasphasenanteile der Reaktionsgefäße, die aneinander angrenzen, miteinander in Verbindung stehen und Flüssigphasenteile der Reaktionsgefäße, die aneinander angrenzen, miteinander durch mindestens einen Zwischenraum zwischen einer Innenwand des Reaktorhauptkörpers und der Teilerplatte und einem Öffnungsabschnitt, der in der Teilerplatte bereitgestellt ist, in Verbindung stehen.

8. Vorrichtung zur kontinuierlichen Herstellung nach Anspruch 7, wobei ein Anteil einer Querschnittsfläche des Zwischenraums oder des Öffnungsabschnitts in einem vertikalen Querschnitt eines Innenraums des Reaktorhauptkörpers von 1 bis 50 % beträgt.

9. Vorrichtung zur kontinuierlichen Herstellung nach Anspruch 7, wobei der Zwischenraum zumindest in einem unteren Abschnitt des Reaktorhauptkörpers bereitgestellt ist.

10. Vorrichtung zur kontinuierlichen Herstellung nach Anspruch 1 oder 9, ferner umfassend:
eine Gaszufuhrleitung, die mit den Gasphasenanteilen der Reaktionsgefäße in dem Reaktorhauptkörper in Verbindung steht und konfiguriert ist, um Inertgas zu dem Gasphasenanteil von einer stromabwärtigen Seite zu einer stromaufwärtigen Seite in einer Bewegungsrichtung des Reaktionsgemischs zu senden; und
eine Abführleitung, die dafür konfiguriert ist, um das Inertgas abzuführen.

11. Vorrichtung zur kontinuierlichen Herstellung nach einem der Ansprüche 1 bis 10, wobei die eine oder die mehreren Teilerplatten zwei oder mehr Teilerplatten umfassen, wobei die Teilerplatten jeweils identische Formen aufweisen.

12. Vorrichtung zur kontinuierlichen Herstellung nach einem der Ansprüche 1 bis 11, wobei die Lösungspolykondensation eine Entsalzungspolykondensation ist.

13. Vorrichtung zur kontinuierlichen Herstellung nach einem der Ansprüche 1 bis 12, ferner umfassend eine Wasserentfernungseinheit, die dafür konfiguriert ist, um Feuchtigkeit aus dem Gasphasenanteil zu entfernen.

14. Verfahren zur kontinuierlichen Herstellung zur Herstellung eines Polymers durch Lösungspolykondensation mit der Vorrichtung zur kontinuierlichen Herstellung nach Anspruch 1, wobei das Verfahren umfasst:
Zuführen eines Lösungsmittels und eines Monomers zu dem Reaktorhauptkörper in der Vorrichtung zur kontinuierlichen Herstellung;
Bilden eines Reaktionsgemischs durch Durchführen einer Polymerisationsreaktion des Monomers in dem Lösungsmittel in mindestens einem Reaktionsgefäß;
Entfernen zumindest eines Teils eines Reaktionsprodukts in dem Reaktorhauptkörper aus dem Reaktorhauptkörper; und
Bewegen des Reaktionsgemischs nacheinander durch die Reaktionsgefäße,
wobei das Zuführen, das Bilden, das Entfernen und das Bewegen gleichzeitig durchgeführt werden.

15. Verfahren zur kontinuierlichen Herstellung nach Anspruch 14, wobei die Lösungspolykondensation eine Entsalzungspolykondensation ist.

16. Verfahren zur kontinuierlichen Herstellung nach Anspruch 14 oder 15, wobei Feuchtigkeit aus dem Gasphasenanteil entfernt wird.

## Revendications

1. Dispositif de production en continu pour produire un polymère par polycondensation en solution, le dispositif comprenant :
un corps principal de réacteur ;
une ou plusieurs plaques de division configurées pour diviser un intérieur du corps principal de réacteur en une pluralité de récipients à réaction ;
une unité d'alimentation de matière première configurée pour alimenter une matière première ; et une unité de récupération de mélange réactionnel configurée pour récupérer un mélange réactionnel,
dans lequel chacune parmi la ou les plaques de division a un centre de rotation ;
des parties en phase gazeuse des récipients à réaction adjacents les uns aux autres communiquent les unes avec les autres et des parties en phase liquide des récipients à réaction adjacents les uns aux autres communiquent les unes avec les autres ; et
un mélange réactionnel généré dans au moins l'un parmi la pluralité de récipients à réaction se déplace séquentiellement à travers les récipients à réaction.

2. Dispositif de production en continu selon la revendication 1, dans lequel le corps principal de réacteur a une forme qui est obtenue en posant sur le côté une colonne cylindrique creuse.

3. Dispositif de production en continu selon la revendication 1 ou 2, dans lequel le centre de rotation est un arbre de rotation.

4. Dispositif de production en continu selon l'une quelconque des revendications 1 à 3, dans lequel le centre de rotation est un arbre de rotation s'étendant à travers la pluralité de récipients à réaction ; et la ou les plaques de division sont fournies sur cet arbre de rotation.

5. Dispositif de production en continu selon l'une quelconque des revendications 1 à 4, comprenant en outre une pale d'agitation ayant un centre de rotation identique à un centre de rotation de la plaque de division.

6. Dispositif de production en continu selon la revendication 5, dans lequel la pale d'agitation est couplée à la plaque de division.

7. Dispositif de production en continu selon l'une quelconque des revendications 1 à 6, dans lequel des parties en phase gazeuse des récipients à réaction adjacents les uns aux autres communiquent les unes avec les autres et des parties en phase liquide des récipients à réaction adjacents les uns aux autres communiquent les unes avec les autres par l'intermédiaire d'au moins l'un parmi un dégagement entre une paroi interne du corps principal de réacteur et la plaque de division et une partie d'ouverture fournie dans la plaque de division.

8. Dispositif de production en continu selon la revendication 7, dans lequel une proportion d'une aire en coupe transversale du dégagement ou de la partie d'ouverture dans une coupe transversale verticale d'un espace interne du corps principal de réacteur va de 1 à 50 %.

9. Dispositif de production en continu selon la revendication 7, dans lequel le dégagement est fourni au moins dans une partie inférieure du corps principal de réacteur.

10. Dispositif de production en continu selon l'une quelconque des revendications 1 à 9, comprenant en outre :
une ligne d'alimentation de gaz communiquant avec les parties en phase gazeuse des récipients à réaction dans le corps principal de réacteur et configurée pour envoyer un gaz inerte vers la partie en phase gazeuse à partir d'un côté en aval vers un côté en amont dans une direction de mouvement du mélange réactionnel ; et
une ligne d'évacuation configurée pour évacuer le gaz inerte.

11. Dispositif de production en continu selon l'une quelconque des revendications 1 à 10, dans lequel la ou les plaques de division comprennent deux plaques de division ou plus, les plaques de division ayant chacune des formes identiques.

12. Dispositif de production en continu selon l'une quelconque des revendications 1 à 11, dans lequel la polycondensation en solution est une polycondensation par dessalage.

13. Dispositif de production en continu selon l'une quelconque des revendications 1 à 12, comprenant en outre une unité d'élimination d'eau configurée pour éliminer l'humidité de la partie en phase gazeuse.

14. Procédé de production en continu pour produire un polymère par polycondensation en solution avec le dispositif de production en continu selon la revendication 1, le procédé comprenant :
l'alimentation d'un solvant et d'un monomère au corps principal de réacteur dans le dispositif de production en continu ;
la formation d'un mélange réactionnel en mettant en oeuvre une réaction de polymérisation du monomère dans le solvant dans au moins un récipient à réaction ;
l'élimination d'au moins une partie d'un produit de réaction dans le corps principal de réacteur hors du corps principal de réacteur ; et
le déplacement séquentiel du mélange réactionnel à travers les récipients à réaction,
dans lequel l'alimentation, la formation, l'élimination, et le déplacement sont mis en oeuvre simultanément.

15. Procédé de production en continu selon la revendication 14, dans lequel la polycondensation en solution est une polycondensation par dessalage.

16. Procédé de production en continu selon la revendication 14 ou 15, dans lequel l'humidité est éliminée de la partie en phase gazeuse.
